# EUROPEAN PATENT APPLICATION

(11) **EP 4 535 839 A1**
(43) Date of publication of application: **09.04.2025**
(21) Application number: 23850235.5
(22) Date of filing: 12.06.2023
(51) Int. Cl.: H04W 4/80, H04W 8/00, H04W 12/04, H04W 12/50, H04W 76/14, H04W 88/02, H04W 12/71

(54) **ELECTRONIC DEVICE COMMUNICATING VIA BLUETOOTH CONNECTION AND OPERATION METHOD THEREFOR**

(30) Priority: 01.08.2022 KR 20220095459; 09.08.2022 KR 20220099545
(71) Applicant: Samsung Electronics Co., Ltd., Suwon-si, Gyeonggi-do 16677 (KR)
(72) Inventor: AN, Junhwan, Suwon-si Gyeonggi-do 16677 (KR); BAE, Yunsik, Suwon-si Gyeonggi-do 16677 (KR)
(74) Representative: Appleyard Lees IP LLP
(86) International application number: PCT/KR2023/008045
(87) International publication number: WO 2024/029725

(57) **Abstract**

According to an embodiment, an electronic device comprising communication circuitry, memory, and at least one processor is disclosed. The at least one processor may be configured to: receive a second advertising signal related to a second service; identify that a first Bluetooth connection for a first service has been established with an external electronic device on the basis of a first advertising signal and the second advertising signal is broadcast from the external electronic device; perform a service search procedure for the second service via the first Bluetooth connection; and transmit and/or receive data packets for the second service to and/from the external electronic device via the first Bluetooth connection. Various other embodiments are possible.

## Description

### [Technical Field]

Embodiments of the disclosure relate to an electronic device communicating through a Bluetooth connection and a method for operating the same.

### [Background Art]

Bluetooth communication technology may suggest a short-range wireless communication technology that enables electronic devices to be connected to each other for exchanging data or information. The Bluetooth communication technology may include Bluetooth legacy (or classic) communication technology or Bluetooth low energy (BLE) communication technology.

An electronic device searches for one or more external electronic devices in the vicinity, establishes a Bluetooth connection with each of the searched external electronic devices, and may use one or more services through the Bluetooth connection. In an embodiment, the electronic device may be a personal computer (PC) or a smartphone, and the external electronic device may include at least one of a speaker, a mouse, a keyboard, a monitor, a tablet computer, or another PC.

The electronic device may discover an external electronic device by receiving a BLE advertisement packet broadcast by the external electronic device through a scan operation based on Bluetooth low energy (BLE), establish a Bluetooth connection (e.g., BLE connection) with the discovered external electronic device, and provide a service (e.g., transmit or receive data packets) to the external electronic device through the Bluetooth connection.

The electronic device may obtain service list information from the external electronic device by performing a service search operation (e.g., service discovery) when the external electronic device allows a connection request. The electronic device may select a desired service based on the obtained service list information, and perform a transmission and/or reception operation of data packets for the selected service.

### [Detailed Description of the Invention]

### [Technical Solution]

An electronic device according to an embodiment may comprise communication circuitry, memory, and at least one processor functionally connected to the communication circuitry and the memory. The at least one processor may be configured to receive a second advertising signal related to a second service. The at least one processor may be configured to identify that a first Bluetooth connection for a first service is established with an external electronic device based on a first advertising signal and the second advertising signal is broadcast from the external electronic device. The at least one processor may be configured to perform a service search procedure for the second service through the first Bluetooth connection. The at least one processor may be configured to transmit and/or receive data packets for the second service to/from the external electronic device through the first Bluetooth connection.

A method for operating an electronic device according to an embodiment may comprise receiving a second advertising signal related to a second service. The method may comprise identifying that a first Bluetooth connection for a first service is established with an external electronic device based on a first advertising signal and the second advertising signal is broadcast from the external electronic device. The method may comprise performing a service search procedure for the second service through the first Bluetooth connection. The method may comprise transmitting and/or receiving data packets for the second service to/from the external electronic device through the first Bluetooth connection.

According to an embodiment, in a non-transitory computer-readable storage medium storing one or more programs, the one or more programs may store instructions to, when executed by at least one processor of an electronic device, enable the electronic device to receive a second advertising signal related to a second service; identify that a first Bluetooth connection for a first service has been established with an external electronic device on the basis of a first advertising signal and the second advertising signal is broadcast from the external electronic device; perform a service search procedure for the second service via the first Bluetooth connection; and transmit and/or receive data packets for the second service to and/from the external electronic device via the first Bluetooth connection. Various other embodiments are possible.

### [Brief Description of the Drawings]

FIG. 1 is a view illustrating an electronic device in a network environment according to various embodiments;
FIG. 2 is a view illustrating an example of connection of electronic devices based on Bluetooth according to an embodiment;
FIG. 3 is a signal flowchart illustrating a procedure for establishing a Bluetooth connection according to an embodiment;
FIG. 4 is a signal flowchart illustrating providing a service through a Bluetooth connection according to an embodiment;
FIG. 5 is a signal flowchart illustrating a failure in Bluetooth connection according to an embodiment;
FIG. 6 is a signal flowchart illustrating an additional service through a Bluetooth connection according to an embodiment;
FIG. 7 is a signal flowchart illustrating a procedure for providing an additional service through a Bluetooth connection according to an embodiment;
FIG. 8 is a view illustrating a packet format of an advertising signal according to an embodiment;
FIGS. 9A and 9B are views illustrating payload formats of an advertising packet according to an embodiment; and
FIGS. 10A and 10B are signal flowcharts illustrating examples of a service search procedure through Bluetooth according to an embodiment.

### [Mode for Carrying out the Invention]

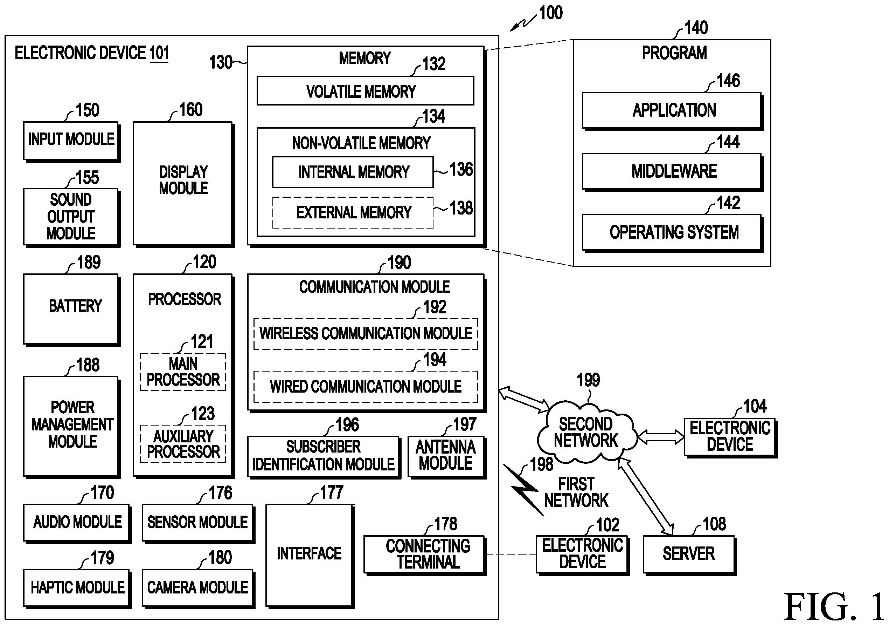

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

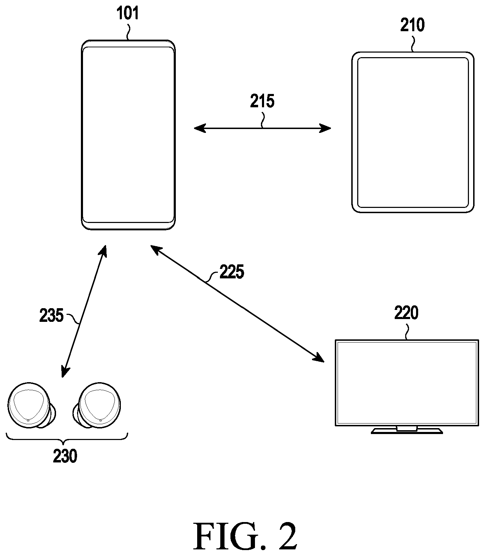

FIG. 2 is a view illustrating an example of connection of electronic devices based on Bluetooth according to an embodiment.

Referring to FIG. 2, an electronic device (e.g., electronic device 101) may perform Bluetooth communication using communication circuitry (e.g., communication module 190) that supports Bluetooth communication technology (e.g., Bluetooth legacy or Bluetooth low energy (BLE). In an embodiment, the electronic device 101 may establish a Bluetooth connection with each of one or more external electronic devices (e.g., a tablet computer 210, a display device 220 (e.g., a television, a personal computer (PC), or a notebook computer), and/or a wearable device 230.

In an embodiment, the electronic device 101 may establish a Bluetooth connection 215 (e.g., a BLE connection) with the tablet computer 210 and transmit data (e.g., video, image, audio, and/or document files) to the tablet computer 210 through the Bluetooth connection 215, or receive data (e.g., video, image, audio, and/or document files) from the tablet computer 210. In an embodiment, the electronic device 101 may establish a Bluetooth connection 225 (e.g., a BLE connection) with the display device 220 and transmit data (e.g., video, image, audio, and/or document file) to the display device 220 through the Bluetooth connection 225, or may receive data (e.g., video, image, audio, and/or document file) from the display device 220. In an embodiment, the electronic device 101 may establish a Bluetooth connection 235 (e.g., a BLE connection) with the wearable device 230 (e.g., wireless earbuds) and transmit data (e.g., audio and/or control commands) to the wearable device 230 through the Bluetooth connection 235, or may receive data (e.g., audio and/or control commands) from the wearable device 230.

In an embodiment, each of the Bluetooth connection 215, the Bluetooth connection 225, or the Bluetooth connection 235 may be used to transmit data packets for at least one service (e.g., a continuity service, a file share service, and/or an audio service).

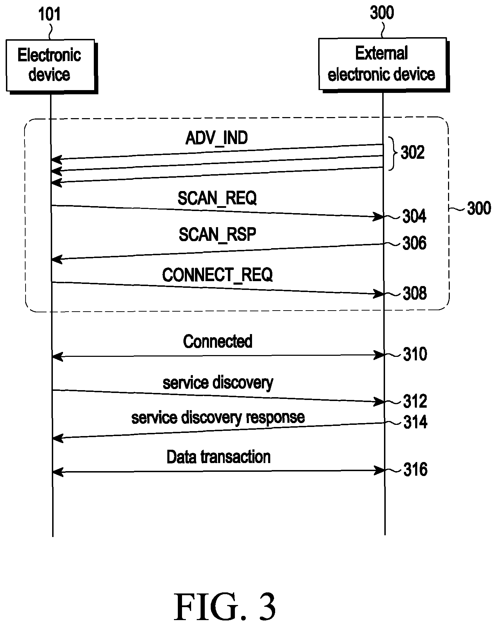

FIG. 3 is a signal flowchart illustrating a procedure for establishing a Bluetooth connection according to an embodiment. In an embodiment, the electronic device 101 may be a central device that provides a service, and the external electronic device 300 may be a peripheral device that receives a service. The electronic device 101 and/or the external electronic device 300 may be configured to include, e.g., one or more of the components of FIG. 1.

Referring to FIG. 3, operation 300 refers to a procedure for advertising and scanning between the electronic device 101 and the external electronic device 300, and may include at least one of operation 302, operation 304, operation 306, or operation 308.

In operation 302, the external electronic device 300 (e.g., the tablet computer 210, the display device 220, or the wearable device 230) may broadcast an advertising signal (e.g., an ADV_IND packet) every designated period to be discovered by a peripheral Bluetooth device (e.g., referred to as an advertising operation). The advertising signal may include the address (e.g., the media access control (MAC) address) of the external electronic device 300. In an embodiment, the external electronic device 300 may be configured to broadcast the advertising signal until before or even after being connected to the counterpart device (e.g., the electronic device 101).

In operation 304, the electronic device 101 detecting the advertising signal through the scan operation may transmit a scan request signal (e.g., SCAN_REQ packet) to the external electronic device 300 using the address of the external electronic device 300 included in the advertising signal. In operation 306, the external electronic device 300 may transmit a scan response signal (e.g., SCAN_RSP packet) to the electronic device 101 to allow Bluetooth connection (e.g., BLE connection) with the electronic device 101. In operation 308, the electronic device 101 may transmit a connection request signal (e.g., a CONNECT_REQ packet or a CONNECT_IND packet) for establishing the Bluetooth connection with the external electronic device 300 to the external electronic device 300.

In operation 310, the electronic device 101 may identify that a Bluetooth connection (e.g., a BLE connection) is established with the external electronic device 300. In an embodiment, the Bluetooth connection may include an asynchronous connectionless (ACL) link. In an embodiment, the electronic device 101 may perform a scan operation or an advertising operation for communication with another Bluetooth device while the Bluetooth connection is established. In an embodiment, the external electronic device 300 may perform a scan operation or an advertising operation to communicate with another Bluetooth device while the Bluetooth connection is established.

In operation 312, the electronic device 101 may transmit a service request packet (e.g., a general attribute profile (GATT) service discovery packet) to the external electronic device 300 through the Bluetooth connection in order to use a desired service (e.g., transmit data packets) through the Bluetooth connection. In operation 314, the electronic device 101 may receive a service response packet (e.g., a GATT service discovery response packet) from the external electronic device 300 and determine to start a service through the Bluetooth connection. In an embodiment, operations 312 and 314 may refer to a procedure for establishing a logical connection (e.g., a service) on the physical connection after a connection procedure for establishing a physical connection (e.g., a Bluetooth connection).

In operation 316, the electronic device 101 and the external electronic device 300 may exchange data packets for the service through the Bluetooth connection. In an embodiment, the electronic device 101 may transmit the data packets to the external electronic device 300, and the external electronic device 300 may receive the data packets from the electronic device 101.

In an embodiment, while establishing a Bluetooth connection with the external electronic device 300 and providing a first service (e.g., a continuity service), the electronic device 101 may receive a new advertising signal from the external electronic device 300 and attempt to establish an additional Bluetooth connection with the external electronic device 300 for a second service (e.g., a file share service). In an embodiment, if a previous advertising signal received during a previous Bluetooth connection and a new advertising signal are received from the same external electronic device 300, a connection request additionally generated by the electronic device 101 for the external electronic device 300 in the state of an existing Bluetooth connection may fail.

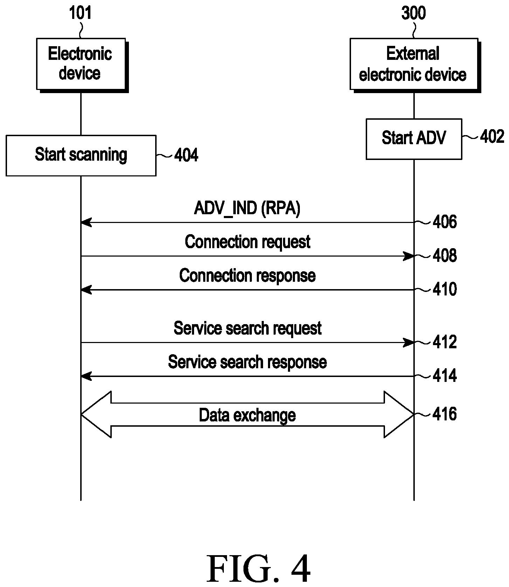

FIG. 4 is a signal flowchart illustrating providing a service through a Bluetooth connection according to an embodiment.

Referring to FIG. 4, in operation 402, the external electronic device 300 may broadcast an advertising signal (e.g., ADV _IND) every designated period (e.g., advertising interval) to be discovered by a peripheral Bluetooth device. In an embodiment, the advertising signal broadcast by the external electronic device 300 may include a random private address (RPA) for privacy of Bluetooth communication instead of a fixed and unique MAC address of the external electronic device 300. The RPA may be generated using a random number and an IRK and may not be tracked by an attacker. The RPA may be resolved by the electronic device 101 that knows the IRK and used to identify the external electronic device 300.

In an embodiment, the IRK may be shared between the electronic device 101 and the external electronic device 300 and stored in the internal memory (e.g., the memory 130) of each of the electronic device 101 and the external electronic device 300. In an embodiment, at least one of the electronic device 101 and the external electronic device 300 may store an IRK list including at least one IRK received from the server (e.g., the server 108 of FIG. 1). In an embodiment, at least one of the electronic device 101 and the external electronic device 300 may store an IRK list including at least one IRK set by the manufacturer.

In an embodiment, the external electronic device 300 may store one or more RPAs according to supportable service types, and may broadcast advertising signals including different RPAs for each service type.

In operation 404, the electronic device 101 may start a scan operation to identify whether there is a peripheral Bluetooth device supporting Bluetooth communication (e.g., BLE communication). In an embodiment, the electronic device 101 may start the scan operation in operation 404 based on identifying that a specific service (e.g., a continuity service) requiring Bluetooth communication is activated. In an embodiment, the electronic device 101 may start the scan operation in operation 404 based on identifying that a specific application requiring Bluetooth communication (e.g., a file sharing application for a file share service) is executed.

In operation 406, the electronic device 101 may receive the advertising signal (e.g., ADV_IND) broadcast by the external electronic device 300 through the scan operation. In an embodiment, the electronic device 101 may identify the external electronic device 300 based on the RPA included in the advertising signal. In an embodiment, the electronic device 300 may identify that the RPA may be resolved using a previously known IRK.

In an embodiment, the electronic device 101 may resolving the advertising signal to identify that the advertising signal includes an advertising packet having a packet format supporting a desired service (e.g., a continuity service or a file share service), and determine whether a connection with the external electronic device 300 is required based on the advertising signal. When it is determined that connection with the external electronic device 300 is necessary, the electronic device 101 may perform operations 408 and 410. When it is determined that connection with the external electronic device 300 is not necessary or the connection with the external electronic device 300 already exists, operations 408 and 410 may be omitted.

In operation 408, the electronic device 101 may transmit a connection request packet (e.g., a CONNECT_REQ packet or a CONNECT_IND packet in operation 308) to the external electronic device 300. In an embodiment, the connection request packet may include the RPA of the external electronic device 330 in the reception address field. In an embodiment, the connection request packet may include one or more parameters (e.g., at least one of window size, window offset, or timeout) to be used for connection between the electronic device 101 and the external electronic device 300. In operation 410, the external electronic device 300 may transmit a connection response packet (e.g., an ACK packet) indicating allowing a connection request of the electronic device 101 in response to the connection request packet to the electronic device 101. When information indicating that the connection request is allowed is included in the connection response packet, the electronic device 101 may identify that a Bluetooth connection (e.g., a BLE connection) with the external electronic device 300 is established, and the electronic device 101 and the external electronic device 300 may operate in a connected mode.

In an embodiment, the electronic device 101 may proceed to operation 412 to start a service based on Bluetooth communication with the external electronic device 300. In an embodiment, when the file sharing application is running, the electronic device 101 may proceed to operation 412. In an embodiment, the electronic device 101 may determine the start of the service in response to a user input (e.g., activation of a continuity service) to start Bluetooth communication, or according to a background operation (e.g., updating a data file to be synchronized according to a continuity service).

In operation 412, the electronic device 101 may transmit a service search request packet (e.g., a GATT service discovery or a CoC connection request) for searching for at least one service provided by the external electronic device 300 through the Bluetooth connection to the external electronic device 300. According to an embodiment, the service search request packet may include service profile information about the electronic device 101. In operation 414, the external electronic device 300 may transmit a service search response packet corresponding to the service search request packet to the electronic device 101. In an embodiment, the service search response packet may include service profile information about the external electronic device 300.

In an embodiment, the profile information about the electronic device 101 may include one or more service elements, and the one or more service elements may include one or more characteristic elements. One or more service elements may include information (e.g., a file share service or a continuity service) about one or more services provided by the electronic device 101, and one or more characteristic elements may include data (e.g., at least portion of a data file) related to a corresponding service.

In operation 416, the electronic device 101 may provide a service to the external electronic device 300 based on the exchange of the service profile information (e.g., transmitting at least a part of a data file to be shared in a file share service or a data file to be synchronized in a continuity service).

In an embodiment, one or more characteristic elements included in the profile information about the electronic device 101 may have a property value. For example, the property value may indicate at least one of a read operation and a write operation, for example. The external electronic device 300 may receive data packets from the electronic device 101 or transmit data packets to the electronic device 101 based on the property value for at least one of the one or more characteristic elements.

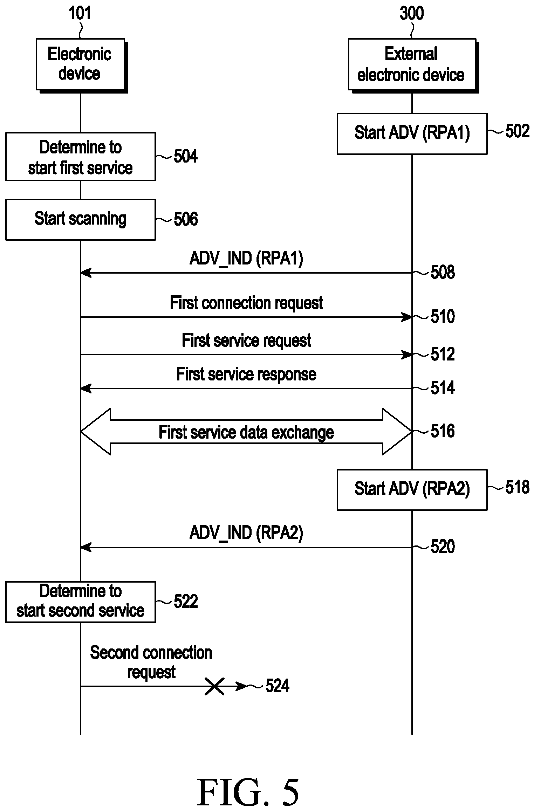

FIG. 5 is a signal flowchart illustrating a failure in Bluetooth connection according to an embodiment.

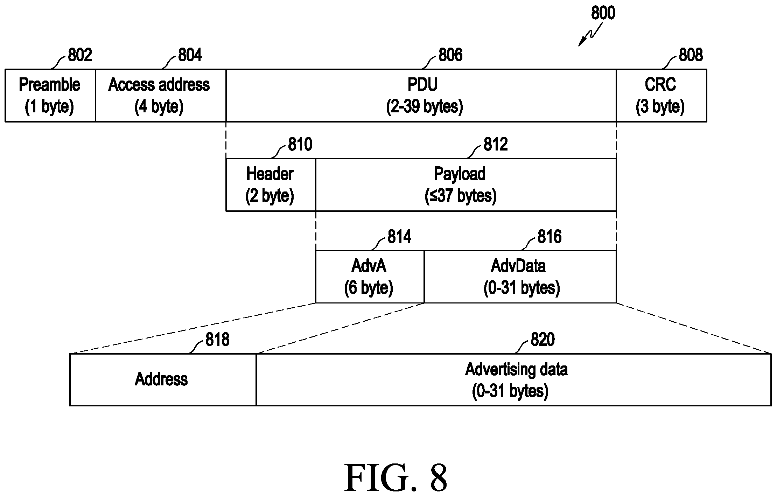

Referring to FIG. 5, in operation 502, the external electronic device 300 may broadcast a first advertising signal (e.g., ADV _IND(RPA1)) every designated period (e.g., advertising interval) to be discovered by a peripheral Bluetooth device. In an embodiment, the first advertising signal may include a first RPA (e.g., RPA1) of the external electronic device 300. In an embodiment, the first advertising signal may be configured according to a designated packet format (e.g., packet format 800 shown in FIG. 8) indicating that the external electronic device 300 supports a specific first service (e.g., a continuity service). In an embodiment, the first RPA may be configured to be used for the specific first service (e.g., a continuity service) in the external electronic device 300.

In operation 504, the electronic device 101 may determine to start the first service. For example, when the first service is a continuity service, and the electronic device 101 detects that the continuity service is activated according to a user input or a system setting, the electronic device 101 may proceed to operation 506. In operation 506, the electronic device 101 starts a scan operation, and in operation 508, the electronic device 101 may receive the first advertising signal (e.g., ADV_IND(RPA1)) from the external electronic device 300 through the scan operation. In an embodiment, the electronic device 101 may identify that the external electronic device 300 supports the first service based on the first advertising signal. In an embodiment, when succeeding in resolving the first advertising signal in a designated format corresponding to the first service, the electronic device 101 may determine that the external electronic device 300 that has transmitted the first advertising signal supports the first service.

In operation 510, the electronic device 101 may transmit a first connection request packet (e.g., a CONNECT_REQ packet or a CONNECT_IND packet) for the first service to the external electronic device 300. In an embodiment, the connection request packet may include the first RPA. A first Bluetooth connection between the electronic device 101 and the external electronic device 300 may be established based on the first connection request packet.

In operation 512, the electronic device 101 may transmit a first service request packet (e.g., at least one of GATT service discovery or CoC connection request) for the first service to the external electronic device 300 through the first Bluetooth connection. In operation 514, the external electronic device 300 may transmit a service response packet (e.g., at least one of a GATT service discovery response or a CoC connection response) corresponding to the service request packet to the electronic device 101.

In operation 516, the electronic device 101 may provide a first service to the external electronic device 300 through the first Bluetooth connection (e.g., transmitting at least a part of a data file to be synchronized according to a continuity service).

FIG. 5 shows an embodiment in which the electronic device 101 receives a first advertising signal from the external electronic device 300 and transmits a first connection request packet and a first service request packet to the external electronic device 300, but the electronic device 101 may establish the first Bluetooth connection with the external electronic device 300 and perform the first service according to various embodiments. In an embodiment, the electronic device 101 may broadcast a first advertising signal indicating that the first service is supported, and may receive a first connection request packet from the external electronic device 300 that has received the first advertising signal to establish a first Bluetooth connection with the external electronic device 300. In an embodiment, the electronic device 101 may start the first service through the first Bluetooth connection by receiving the first service request packet from the external electronic device 300 through the first Bluetooth connection and transmitting the first service response packet to the external electronic device 300.

In operation 518, the external electronic device 300 may broadcast a second advertising signal (e.g., ADV_IND(RPA2)) including the second RPA according to a designated period (e.g., advertising interval), separately from transmission of the first advertising signal (e.g., ADV _IND(RPA1)) including the first RPA. In an embodiment, if the designated second service is activated (e.g., when the second service is turned on by the user), the external electronic device 300 may start broadcasting the second advertising signal. In an embodiment, if the designated second service is activated (e.g., if the second service is turned on by the user), the external electronic device 300 may wait to receive a packet (e.g., an advertising request packet) requesting an advertising operation from the electronic device 101. In an embodiment, if the designated second service is activated (e.g., if the second service is turned on by the user), the electronic device 101 may transmit the advertising request packet to the external electronic device 300. In an embodiment, the external electronic device 300 may initiate an advertising operation of broadcasting the second advertising signal in response to receiving the advertising request packet from the electronic device 101.

In an embodiment, the second advertising signal may be configured according to a designated packet format (e.g., packet format 800 shown in FIG. 8) indicating that the external electronic device 300 supports a second service (e.g., a file share service). In an embodiment, the second RPA may be configured to be used for a specific second service (e.g., a file share service) in the external electronic device 300. In an embodiment, the external electronic device 300 may broadcast the second advertising signal while the second service may be supported.

In operation 520, the electronic device 101 may receive the second advertising signal (e.g., ADV_IND(RPA2)) from the external electronic device 300. In an embodiment, the electronic device 101 may continuously perform the scan operation in operation 506 to receive the second advertising signal. In an embodiment, the electronic device 101 may identify that the external electronic device 300 supports the second service based on the second advertising signal. In an embodiment, when succeeding in resolving the second advertising signal in a designated format corresponding to the second service, the electronic device 101 may determine that the external electronic device 300 that has transmitted the second advertising signal supports the second service.

In operation 522, while providing a first service (e.g., a continuity service) to the external electronic device 300 through a first Bluetooth connection, the electronic device 101 may determine to start the second service. For example, when the second service is a file share service, and the electronic device 101 detects that the file share service is activated according to a user input (e.g., a user input for selecting a data file for the file share service) or a system setting, the electronic device 101 may proceed to operation 526. In an embodiment, operation 522 may be performed before operation 520. For example, when the second service is a file share service, and the electronic device 101 detects that the file share service is activated according to a user input or system setting, the electronic device 101 may proceed to operation 520.

In an embodiment, before operation 518 and operation 520, the electronic device 101 may request an advertising operation from the external electronic device 300 after determining to start the second service in operation 522. The external electronic device 300 may start the advertising operation in operation 518 based on the request, and broadcast a second advertising signal including the second RPA in operation 520. The electronic device 101 may proceed to operation 524 based on receiving the second advertising signal.

In operation 524, the electronic device 101 may transmit a second connection request packet (e.g., a CONNECT_REQ packet or a CONNECT_IND packet) for a second service to the external electronic device 300. In an embodiment, the connection request packet may include the second RPA. In an embodiment, since the first Bluetooth connection already established between the electronic device 101 and the external electronic device 300 exists, a connection request according to the second connection request packet may fail. In an embodiment, the external electronic device 300 may not allow a connection request according to the second connection request packet based on the external electronic device 101 being already connected (e.g., a previously established first Bluetooth connection exists). In an embodiment, the external electronic device 300 may disregard the second connection request packet.

Although not shown, in an embodiment, the external electronic device 300 may transmit a second connection response packet indicating a connection error or not allowing a connection request according to the second connection request packet to the electronic device 101. Although not shown, in an embodiment, the electronic device 101 may block or omit the transmission of the second connection request packet based on being already connected with the same external electronic device 300 (e.g., a previously established first Bluetooth connection exists). In an embodiment, when only one Bluetooth connection exists between the electronic device 101 and the external electronic device 300, the electronic device 101 may not transmit a connection request (e.g., the second connection request packet) to the already connected external electronic device 300.

In an embodiment, the electronic device 101 may identify that the connection request for the second service has failed based on receiving a second connection response packet indicating not allowing the connection request or a connection error, or not receiving a response packet corresponding to the second connection request packet. The electronic device 101 may visually, audibly and/or tactilely output a notification for the user indicating that the connection request for the second service has failed (e.g., "connection with the external electronic device 300 failed"). In an embodiment, the electronic device 101 may provide the user with a reason why the connection request for the second service has failed (e.g., "connection with the external electronic device 300 already exists").

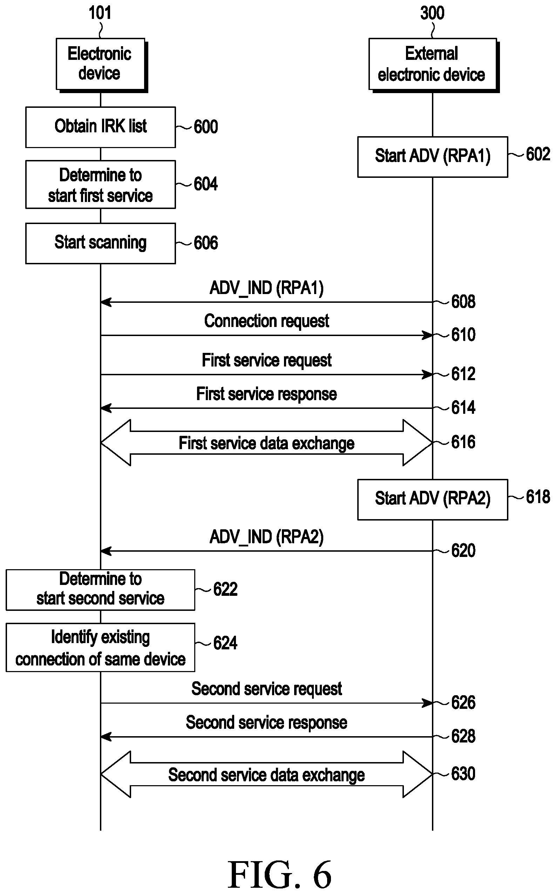

FIG. 6 is a signal flowchart illustrating an additional service through a Bluetooth connection according to an embodiment.

Referring to FIG. 6, in operation 600, the electronic device 101 may obtain an IRK list (e.g., a resolving list) including at least one IRK available for Bluetooth communication. In an embodiment, at least one IRK in the IRK list may be received from a server (e.g., the server 108 of FIG. 1). In an embodiment, at least one IRK in the IRK list may be received from the counterpart device (e.g., the external electronic device 300) during a previous connection. In an embodiment, at least one IRK in the IRK list may be set by the manufacturer.

In operation 602, the external electronic device 300 may broadcast a first advertising signal (e.g., ADV _IND(RPA1)) every designated period (e.g., advertising interval) to be discovered by a peripheral Bluetooth device. In an embodiment, the first advertising signal may include a first RPA (e.g., RPA1) of the external electronic device 300. In an embodiment, the first advertising signal may be configured according to a designated packet format (e.g., packet format 800 shown in FIG. 8) indicating that the external electronic device 300 supports a specific first service (e.g., a continuity service). In an embodiment, the first RPA may be configured to be used for the specific first service (e.g., a continuity service) in the external electronic device 300.

In operation 604, the electronic device 101 may determine to start the first service. For example, when the first service is a continuity service, and the electronic device 101 detects that the continuity service is activated according to a user input or a system setting, the electronic device 101 may proceed to operation 606. In operation 606, the electronic device 101 starts a scan operation, and in operation 608, the electronic device 101 may receive the first advertising signal (e.g., ADV_IND(RPA1)) from the external electronic device 300 through the scan operation. In an embodiment, the first advertising signal may include the advertising packet 800 illustrated in FIG. 8. In an embodiment, the electronic device 101 may identify that the external electronic device 300 supports the first service based on the first advertising signal. In an embodiment, when succeeding in resolving the first advertising signal in a designated format corresponding to the first service, the electronic device 101 may determine that the external electronic device 300 that has transmitted the first advertising signal supports the first service. In an embodiment, the electronic device 101 may resolve the first RPA using at least one IRK in the IRK list obtained in operation 600, and identify that the first RPA is normally resolved.

In an embodiment, the first RPA may be 48 bits, the upper 24 bits may represent a random part (e.g., prand) including a random value of 22 bits and two fixed bits (e.g., 0 and 1), and the lower 24 bits may represent a hash part (e.g., a hash value) generated using the prand and IRK. In an embodiment, the electronic device 101 may calculate a local hash value (e.g., localHash) by performing a designated hash operation using at least one IRK in the IRK list and the prand as an input.
localHash = ah (IRK, prand)

Here, ah may mean the designated hash operation.

The local hash value is compared with the hash value in the first RPA, and when the local hash value matches the hash value in the first RPA, the electronic device 101 may determine that the external electronic device 300 may be identified using the first RPA. In an embodiment, when the electronic device 101 has one or more IRKs stored in the IRK list, the electronic device 101 may repeat the operation for each stored IRK until the IRK corresponding to the first RPA is determined. In an embodiment, the electronic device 101 may store the IRK (e.g., first IRK) used in the resolving of the first RPA in association with the first RPA.

In operation 610, the electronic device 101 may transmit a first connection request packet (e.g., a CONNECT_REQ packet or a CONNECT_IND packet) for the first service to the external electronic device 300. In an embodiment, the connection request packet may include the first RPA. A first Bluetooth connection between the electronic device 101 and the external electronic device 300 may be established based on the first connection request packet. In an embodiment, the first Bluetooth connection may include an ACL link.

In operation 612, the electronic device 101 may transmit a first service request packet (e.g., at least one of GATT service discovery or CoC connection request) for the first service to the external electronic device 300 through the first Bluetooth connection. In operation 614, the external electronic device 300 may transmit a service response packet (e.g., at least one of a GATT service discovery response or a CoC connection response) corresponding to the service request packet to the electronic device 101.

In operation 616, the electronic device 101 may provide a first service to the external electronic device 300 through the first Bluetooth connection (e.g., transmitting at least a part of a data file to be synchronized according to a continuity service).

FIG. 6 shows an embodiment in which the electronic device 101 receives a first advertising signal from the external electronic device 300 and transmits a first connection request packet and a first service request packet, but the electronic device 101 may establish the first Bluetooth connection with the external electronic device 300 and perform the first service according to various embodiments. **In** an embodiment, the electronic device 101 may broadcast a first advertising signal indicating that the first service is supported, and may receive a first connection request packet from the external electronic device 300 that has received the first advertising signal to establish a first Bluetooth connection with the external electronic device 300. **In** an embodiment, the electronic device 101 may start the first service through the first Bluetooth connection by receiving the first service request packet from the external electronic device 300 through the first Bluetooth connection and transmitting the first service response packet to the external electronic device 300.

**In** operation 618, the external electronic device 300 may broadcast a second advertising signal (e.g., ADV_IND(RPA2)) including the second RPA according to a designated period (e.g., advertising interval), separately from transmission of the first advertising signal (e.g., ADV _IND(RPA1)) including the first RPA. **In** an embodiment, if the designated second service is activated (e.g., when the second service is turned on by the user), the external electronic device 300 may start broadcasting the second advertising signal. **In** an embodiment, if the designated second service is activated (e.g., if the second service is turned on by the user), the external electronic device 300 may wait to receive a packet (e.g., an advertising request packet) requesting an advertising operation from the electronic device 101. **In** an embodiment, if the designated second service is activated (e.g., if the second service is turned on by the user), the electronic device 101 may transmit the advertising request packet to the external electronic device 300. In an embodiment, the external electronic device 300 may initiate an advertising operation of broadcasting the second advertising signal in response to receiving the advertising request packet from the electronic device 101.

In an embodiment, the second advertising signal may be configured according to a designated packet format (e.g., packet format 800 shown in FIG. 8) indicating that the external electronic device 300 supports a second service (e.g., a file share service). In an embodiment, the second RPA may be configured to be used for a specific second service (e.g., a file share service) in the external electronic device 300. In an embodiment, the external electronic device 300 may broadcast the second advertising signal while the second service may be supported.

In operation 620, the electronic device 101 may receive the second advertising signal (e.g., ADV_IND(RPA2)) from the external electronic device 300. In an embodiment, the electronic device 101 may continuously perform the scan operation in operation 606 to receive the second advertising signal. In an embodiment, the second advertising signal may include the advertising packet 800 illustrated in FIG. 8. In an embodiment, the electronic device 101 may identify that the external electronic device 300 supports the second service based on the second advertising signal. In an embodiment, when succeeding in resolving the second advertising signal in a designated format corresponding to the second service, the electronic device 101 may determine that the external electronic device 300 that has transmitted the second advertising signal supports the second service.

In operation 622, while providing a first service (e.g., a continuity service) to the external electronic device 300 through a first Bluetooth connection, the electronic device 101 may determine to start the second service. For example, when the second service is a file share service, and the electronic device 101 detects that the file share service is activated according to a user input (e.g., a user input for selecting a data file for the file share service) or a system setting, the electronic device 101 may proceed to operation 624. In an embodiment, operation 622 may be performed before operation 620. For example, when the second service is a file share service, and the electronic device 101 detects that the file share service is activated according to a user input or system setting, the electronic device 101 may proceed to operation 620.

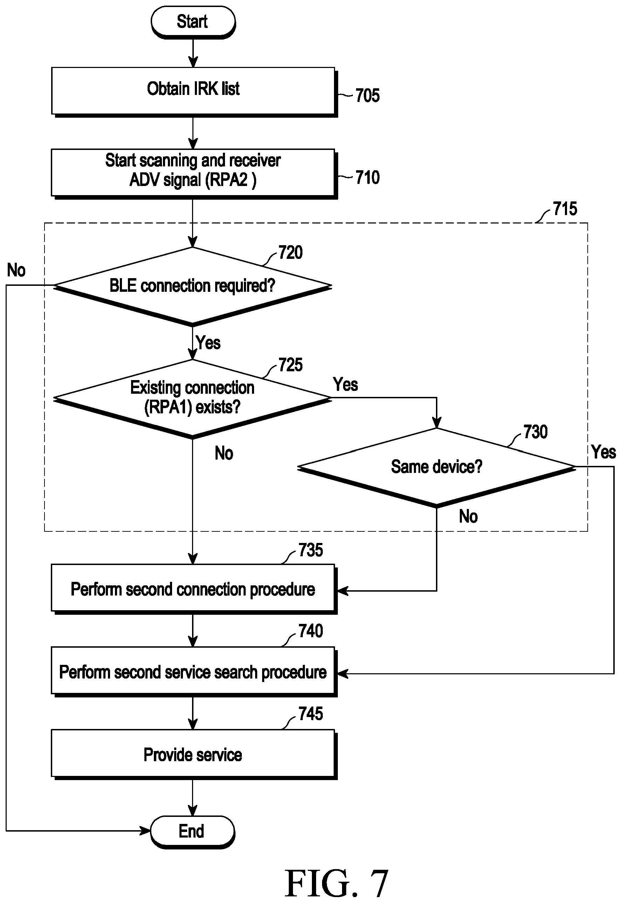

In operation 624, the electronic device 101 may identify that the second advertising signal is broadcast from the external electronic device 300 related to the first advertising signal, and that the first Bluetooth connection with the external electronic device 300 has been previously established. In an embodiment, the first Bluetooth connection may be established based on a connection request from the electronic device 101 or a connection request from the external electronic device 300. In an embodiment, operation 624 may include operation 715 of FIG. 7.

In an embodiment, the electronic device 101 may resolve the second RPA using at least one IRK in the IRK list obtained in operation 600, and identify that the second RPA is normally resolved. In an embodiment, the electronic device 101 may determine that the external electronic device 300 may be identified using the second RPA by determining a local hash value by performing a hash operation based on the prand in the second RPA and one IRK (e.g., a second IRK) in the IRK list, and identifying that the local hash value matches the hash value in the second RPA. In an embodiment, the electronic device 101 may determine that it has already been connected with the same external electronic device 300 by identifying that the second IRK is the same as the first IRK related to the previously established first Bluetooth connection. In an embodiment, the electronic device 101 may determine to provide a second service using the existing connection (e.g., the first Bluetooth connection) with the external electronic device 300 based on being already connected with the same external electronic device 300.

In operation 626, the electronic device 101 may transmit a second service request packet (e.g., at least one of a GATT service discovery packet or a CoC connection request packet) for the second service to the external electronic device 300 through the first Bluetooth connection. In operation 628, the electronic device 101 may receive a service response packet (e.g., at least one of a GATT service discovery response packet or a CoC connection response packet) from the external electronic device 300 and determine to start the second service through the first Bluetooth connection.

In operation 630, the electronic device 101 and the external electronic device 300 may exchange data packets (e.g., at least a part of a data file to be shared according to a file share service) for the second service through the first Bluetooth connection. In an embodiment, the electronic device 101 may transmit the data packets to the external electronic device 300, and the external electronic device 300 may receive the data packets from the electronic device 101. Although not shown, the first service may be continuously performed between the electronic device 101 and the external electronic device 300. In an embodiment, the electronic device 101 may transmit or receive data packets for the first service through the first Bluetooth connection, and may also transmit or receive data packets for the second service through a first Bluetooth connection.

FIG. 7 is a signal flowchart illustrating a procedure for providing an additional service through a Bluetooth connection according to an embodiment. At least one of operations to be described below may be executed by the processor 120 of the electronic device 101. According to embodiments, at least one of operations to be described below may be omitted, modified, or ordered.

Referring to FIG. 7, in operation 705, the electronic device 101 (e.g., the processor 120) may obtain an IRK list (e.g., a resolving list) including at least one IRK available for Bluetooth communication. In an embodiment, the IRK list may be stored in the memory (e.g., the memory 130) of the electronic device 101. In an embodiment, at least one IRK in the IRK list may be received from a server (e.g., the server 108 of FIG. 1). In an embodiment, at least one IRK in the IRK list may be obtained from the counterpart device (e.g., the external electronic device 300). In an embodiment, at least one IRK in the IRK list may be set by the manufacturer. When the IRK list is previously stored in the electronic device 101, operation 705 may be omitted.

In operation 710, the electronic device 101 (e.g., the processor 120) may start a scan operation and receive a second advertising signal through the scan operation. In an embodiment, the electronic device 101 (e.g., the processor 120) may start the scan operation based on determining to start the first service (e.g., a continuity service). In an embodiment, the second advertising signal may include the address (e.g., the second RPA (RPA2)) of the sender (e.g., the external electronic device 300). In an embodiment, the electronic device 101 (e.g., the processor 120) may resolve the second RPA using one IRK (e.g., the second IRK) in the IRK list obtained in operation 705.

In an embodiment, the electronic device 101 (e.g., the processor 120) may start the scan operation while establishing a first Bluetooth connection (e.g., a BLE connection) with the external electronic device 300 and providing a first service (e.g., a continuity service) through the first Bluetooth connection. In an embodiment, the first Bluetooth connection may be established based on the first advertising signal from the external electronic device 300. In an embodiment, the first advertising signal may include a first RPA RPA1, and the electronic devices 101 (e.g., the processor 120) may pre-store that the first RPA is resolved by one IRK (e.g., the first IRK) in the IRK list. In an embodiment, the first Bluetooth connection may be established according to a connection request from the electronic device 101 (e.g., the processor 120) or a connection request from the external electronic device 300. In an embodiment, the electronic device 101 (e.g., the processor 120) may store that the external electronic device 300 is identified with the first RPA while establishing the first Bluetooth connection.

In operation 715, the electronic device 101 (e.g., the processor 120) may determine whether to perform a connection procedure for the second service with the counterpart device (e.g., the external electronic device 300) identified by the second RPA RPA2. In an embodiment, the electronic device 101 (e.g., the processor 120) may determine whether to perform the second service using a previously established Bluetooth connection through operation 715. In an embodiment, operation 715 may include at least one of operation 720, operation 725, and operation 730.

In operation 720, the electronic device 101 (e.g., the processor 120) may determine whether a second Bluetooth connection (e.g., a BLE connection) with the external electronic device 300 is required. In an embodiment, the electronic device 101 may identify that the external electronic device 300 supports the second service based on the second advertising signal. In an embodiment, when the electronic device 101 (e.g., the processor 120) determines to start the second service (e.g., a file share service) for the external electronic device 300, the electronic device 101 may determine that it is necessary to connect to the external electronic device 300 using Bluetooth communication for the second service. In an embodiment, when the electronic device 101 (e.g., the processor 120) detects activation of the second service according to a user input or a system setting, detects that the second service is a continuity service and detects a change or update of the data file to be synchronized according to the continuity service, or the second service is a file share service and transmission of the data file according to the file share service is required, the electronic device 101 (e.g., the processor 120) may determine that a Bluetooth connection with the external electronic device 300 is required.

When it is determined that the Bluetooth connection is necessary, the electronic device 101 (e.g., the processor 120) may proceed to operation 725. When the Bluetooth connection is not required, the electronic device 101 (e.g., the processor 120) may terminate the procedure.

In operation 725, the electronic device 101 (e.g., the processor 120) may determine whether there is an existing Bluetooth connection (e.g., a first Bluetooth connection) with the external electronic device 300. When it is detected in operation 725 that the external electronic device 300 is not previously connected, the electronic device 101 (e.g., the processor 120) may proceed to operation 735. In an embodiment, the electronic device 101 (e.g., the processor 120) may identify that the electronic device 101 communicates with the external electronic device 300 through the first Bluetooth connection and the first RPA used for the first Bluetooth connection. When it is identified that the first Bluetooth connection exists, the electronic device 101 (e.g., the processor 120) may proceed to operation 730.

In operation 730, the electronic device 101 (e.g., the processor 120) may determine whether the second advertising signal is broadcast from the external electronic device 300 establishing the first Bluetooth connection. In an embodiment, the electronic device 101 (e.g., the processor 120) may determine whether the external electronic device 300 establishing the first Bluetooth connection is the same as the counterpart device that has transmitted the second advertising signal based on the first RPA used for the first Bluetooth connection, the second RPA included in the second advertising signal. In an embodiment, if the resolving of both the first RPA and the second RPA is successful with one IRK (e.g., the first IRK) in the IRK list obtained in operation 705, the electronic device 101 (e.g., the processor 120) may determine that the second advertising signal is received from the existing connected external electronic device 300.

In an embodiment, the electronic device 101 (e.g., the processor 120) may attempt to resolve the second RPA using each IRK in the IRK list obtained in operation 705, and may identify that the second RPA may be resolved using, e.g., the second IRK. In an embodiment, the electronic device 101 (e.g., the processor 120) may determine a local hash value by performing a hash operation based on the prand in the second RPA and one IRK (e.g., a second IRK) in the IRK list, and identify that the local hash value matches the hash value in the second RPA. In an embodiment, the electronic device 101 (e.g., the processor 120) may determine that the external electronic device 300 establishing the first Bluetooth connection and the counterpart device that has transmitted the second advertising signal are the same based on the second IRK being the same as the first IRK related to the previously established first Bluetooth connection.

For example, the IRK list may include the following IRKs.
IRK[1]: 6f17954ef9b03e48ab4e5fbd49a47826
IRK[2]: 9ac9472eb1899290835645932c4ad246
IRK[3]: 1025944A210379D528CBAAC50108D4B1

For example, the first RPA RPA1 of an existing Bluetooth connection and the second RPA RPA2 included in the newly received second advertising signal may be as follows.
RPA1 = 6C:0F:74:05:9F:E4
RPA2 = 71:C5:00:5E:6B:3E

The results of resolving each RPA may be as follows.
IRK[1] -> RPA1 resolve fail, RPA2 resolve fail
IRK[2] -> RPA1 resolve fail, RPA2 resolve fail
IRK[3] -> RPA1 resolve success, RPA2 resolve success

Based on the successful resolving of both RPA1 and RPA2 with IRK[3] the electronic device 101 may identify that the second advertising signal is received from the existing connected external electronic device 300.

Based on determining that the external electronic device 300 establishing the first Bluetooth connection and the counterpart device that has transmitted the second advertising signal are the same, the electronic device 101 (e.g., the processor 120) may proceed to operation 740 to provide a second service using the first Bluetooth connection instead of establishing a new Bluetooth connection. On the other hand, when the external electronic device 300 establishing the first Bluetooth connection and the counterpart device that has transmitted the second advertising signal are not the same, the electronic device 101 (e.g., the processor 120) may proceed to operation 735.

In operation 735, the electronic device 101 (e.g., the processor 120) may establish a second Bluetooth connection (e.g., a new ACL link) by performing a second connection procedure with the external electronic device 300. In an embodiment, the second connection procedure may include transmitting a connection request packet (e.g., a CONNECT_REQ packet or a CONNECT_IND packet) to the external electronic device 300 and receiving a connection response packet from the external electronic device 300.

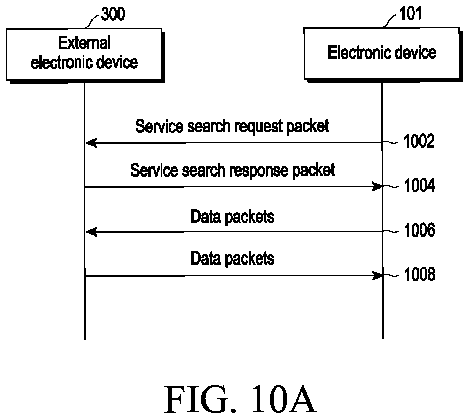

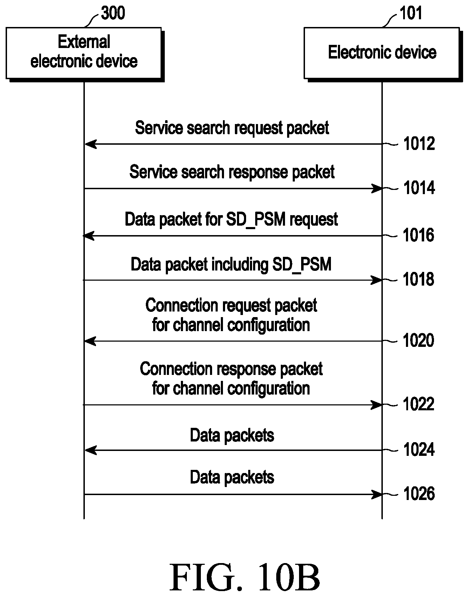

In operation 740, the electronic device 101 (e.g., the processor 120) may perform a second service search procedure for a second service to the external electronic device 300. In an embodiment, the second service search procedure may include transmitting a second service request packet (e.g., a GATT service discovery packet or a CoC connection request packet) to the external electronic device 300 using the second RPA and receiving a second service response packet (e.g., a GATT service discovery response packet or a CoC connection response packet). In an embodiment, the second service search procedure may include operations 1002 and 1004 of the service search procedure of FIG. 10A. In an embodiment, the second service search procedure may include operation 1012, operation 1014, operation 1016, operation 1018, operation 1020, and operation 1022 of the service search procedure of FIG. 10B.

In an embodiment, based on identifying that the first Bluetooth connection exists with the external electronic device 300 that has transmitted the second advertising signal including the second RPA 2 (e.g., when it is 'Yes' in operation 730), the electronic device 101 (e.g., the processor 120) may transmit the second service request packet through the first Bluetooth connection without establishing a new Bluetooth connection. In an embodiment, when the electronic device 101 (e.g., the processor 120) does not have a Bluetooth connection (e.g., when it is 'No' in operation 725), or is not already connected to the external electronic device 300 (e.g., when it is 'No' in operation 730), the electronic device 101 (e.g., the processor 120) may transmit the second service request packet through the second Bluetooth connection established in operation 735.

After performing the second service search procedure, in operation 745, the electronic device 101 and the external electronic device 300 may exchange data packets (e.g., at least a part of a data file to be shared according to a file share service) for the second service through the first Bluetooth connection or the second Bluetooth connection. In an embodiment, the electronic device 101 may transmit the data packets to the external electronic device 300, and the external electronic device 300 may receive the data packets from the electronic device 101 (e.g., operation 1006 of FIG. 10A or operation 1024 of FIG. 10B). In an embodiment, the external electronic device 300 may transmit the data packets to the electronic device 101, and the electronic device 101 may receive the data packets from the external electronic device 300 (e.g., operation 1008 of FIG. 10A or operation 1026 of FIG. 10B). In an embodiment, the electronic device 101 may transmit or receive data packets for the first service through the first Bluetooth connection, and may also transmit or receive data packets for the second service through a first Bluetooth connection or second Bluetooth connection.

FIG. 8 is a view illustrating a packet format of an advertising signal according to an embodiment.

Referring to FIG. 8, an advertising packet 800 (e.g., a first advertising signal or a second advertising signal) may include at least one of a preamble field 802, an access address field 804, a protocol data unit (PDU) field 806, or a cyclical redundancy check (CRC) field 808.

The preamble field 802 may include one byte of information used to perform frequency synchronization and/or symbol timing estimation in the electronic device (e.g., the electronic device 101) that has received the advertising packet 800. In an embodiment, the preamble field 802 may include a fixed one-byte sequence configured in the form of alternating bits of 0 and 1, based on the access address included in the access address field 804. For example, the preamble field 802 may include "101010" when the access address included in the access address field 804 starts with 1, and may include "01010101" when the access address included in the access address field 804 starts with 0.

The access address field 804 may include a 4-byte access address given for the advertising packet 800. In an embodiment, the access address field 804 may include a fixed value (e.g., 0x8E89BED6) that is given for the advertising packet type.

The PDU field 806 may have a variable length from a minimum of 2 bytes to a maximum of 39 bytes. In an embodiment, the PDU field 806 may include an advertising physical channel PDU. The CRC field 608 may include a 3-byte CRC code used to detect an error in the advertising packet 800 received from the external electronic device 300.

In an embodiment, the PDU field 806 may include a 2-byte header field 810 and a payload field 812 capable of having a length of up to 37 bytes. In an embodiment, the header field 810 may include information indicating the type and length of data included in the payload field 812. In an embodiment, the header field 810 may include information indicating that the type of data included in the payload field 812 is advertising data.

In an embodiment, the payload field 812 may have a variable length of 37 bytes or less, and may include an advertising address (AdvA) field 814 and an advertising data (AdvData) field 816. The AdvA field 814 may include the address 818 of the external electronic device 300 broadcasting the advertising packet 800. In an embodiment, the address 818 of the external electronic device 300 may be a fixed MAC address or RPA.

In an embodiment, the AdvData field 816 may include advertising data 820 of up to 31 bytes, and the advertising data 820 may be composed of one or more (e.g., N) advertising data (AD) elements. Each AD element may include a length field, a type field, and an AD data field. In an embodiment, the length field may indicate the length of the AD data field, and the type field may indicate the advertising type (e.g., AD_type) of data included in the AD data field. Table 1 illustrates values of the type field according to an embodiment.

**[Table 1]**

| AD_type | context |
|---|---|
| service universally unique identifier (UUID) | identifier information about the service provided by the external electronic device 300 |
| manufacturer specific data | At least one of data defined by the manufacturer of the external electronic device 300 or data set by the external electronic device 300 may be included. |
| transmission power level | transmission power level used by the external electronic device 300 to transmit the advertising packet |
| slave connection interval range | connection period range to be used by the electronic device 101 receiving the advertising packet |
| service solicitation | information about one or more services for reception through the electronic device 101 and is used to invite the electronic device 101 for connection. |
| service data | data associated with the service provided by the external electronic device 300 (which may include the service UUID) |
| uniform resource | URI related to the service provided by the external electronic device |
| identifier (URI) | 300 |

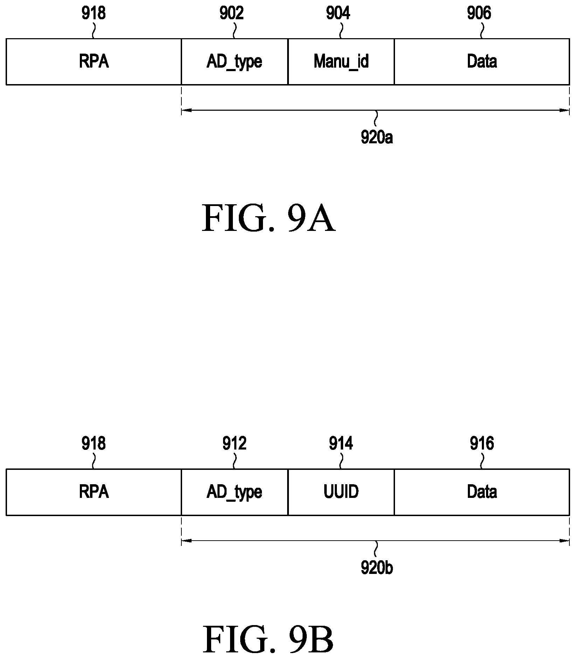

FIG. 9A is a view illustrating a payload format of an advertising packet according to an embodiment.

Referring to FIG. 9A, an advertising packet 800 (e.g., the first advertising signal or the second advertising signal) may include, e.g., an RPA 918 (e.g., the first RPA or the second RPA) and first advertising data 920a in the payload field 812. In an embodiment, when the external electronic device 300 supports a continuity service, the first advertising data 920a may include, e.g., an AD_type 902 set as the 'manufacturer specific data' of Table 1, a manufacturer ID (manu_id) 904, and data 906 having a designated data pattern. The electronic device 101 may receive the advertising packet 800 (e.g., the first advertising signal or the second advertising signal) including the first advertising data 920a, and may identify that the external electronic device 300 supports the continuity service based on the first advertising data 920a. In an embodiment, when the external electronic device 300 supports a file share service, the electronic device 101 may identify that the external electronic device 300 supports the file share service based on the first advertising data 920a in a similar manner.

FIG. 9B is a view illustrating a payload format of an advertising packet according to an embodiment.

Referring to FIG. 9B, an advertising packet 800 (e.g., the first advertising signal or the second advertising signal) may include, e.g., an RPA 918 (e.g., the first RPA or the second RPA) and second advertising data 920B in the payload field 812. In an embodiment, when the external electronic device 300 supports a continuity service, the second advertising data 920b may include, e.g., an AD_type 912 set as the 'service UUID' of Table 1, a UUID 914 set as a value indicating the continuity service, and data 916. The electronic device 101 may receive the advertising packet 800 (e.g., the first advertising signal or the second advertising signal) including the second advertising data 920b, and may identify that the external electronic device 300 supports the continuity service based on the second advertising data 920b. In an embodiment, when the external electronic device 300 supports the file share service, the electronic device 101 may identify that the external electronic device 300 supports the file share service based on the second advertising data 920b in a similar manner.

FIG. 10A is a signal flowchart illustrating an example of a service search procedure through Bluetooth according to an embodiment. According to embodiments, at least one of operations to be described below may be omitted, modified, or ordered.

Referring to FIG. 10A, in operation 1002, the electronic device 101 may transmit a service search request packet (e.g., a GATT service discovery packet) for a second service (e.g., a file share service) to the external electronic device 300 through the first Bluetooth connection while providing the first service (e.g., a continuity service) through the first Bluetooth connection in a state in which the first Bluetooth connection with the external electronic device 300 is established. In operation 1004, the external electronic device 300 may transmit a service search response packet including service list information supported by the external electronic device 300 to the electronic device 101 in response to the service search request packet. In an embodiment, the service search procedure shown in operations 1002 and 1004 may include a GATT-based service search operation.

In an embodiment, the service list information about the external electronic device 300 may include one or more service elements, and each service element may include information about a service provided by the external electronic device 300 and at least one characteristic element. In an embodiment, each characteristic element may have, e.g., a property value indicating a read operation or a write operation. The electronic device 101 may identify that the external electronic device 300 supports a second service (e.g., a file share service) based on the service list information about the external electronic device 300, and may transmit data packets to the external electronic device 101 or receive data packets from the external electronic device 300 based on the property value for each characteristic element.

For example, when the property value for at least one characteristic element indicates the write operation, the electronic device 101 may transmit at least one data packet including data to be included in at least one characteristic element to the external electronic device 300 in operation 1006. In an embodiment, the transmitted at least one data packet may be configured in a data format defined according to the second service. For example, when the property value for the at least one characteristic element indicates a read operation, in operation 1008, the electronic device 101 may receive at least one data packet including data included in the at least one characteristic element from the external electronic device 300. In an embodiment, the received at least one data packet may be configured in a data format defined according to the second service. In an embodiment, the operation order of operations 1006 and 1008 may be changed. In an embodiment, at least one of operations 1006 and 1008 may be performed one or more times, and at least one of operations 1006 and 1008 may be omitted.

FIG. 10B is a view illustrating an example of a service search procedure through Bluetooth according to an embodiment. According to embodiments, at least one of operations to be described below may be omitted, modified, or ordered.

Referring to FIG. 10B, in operation 1012, the electronic device 101 may transmit a service search request packet for searching for at least one service provided by the external electronic device 300 to the external electronic device 300 while providing the first service (e.g., a continuity service) through the first Bluetooth connection in a state in which the first Bluetooth connection with the external electronic device 300 is established. In operation 1014, the external electronic device 300 may transmit a service search response packet including service list information to the electronic device 101 in response to the service search request packet. In an embodiment, the service search procedure as shown in operations 1012 and/or 1014 may include a GATT-based service search operation. In an embodiment, the electronic device 101 may select a desired service (e.g., the second service) based on the service list information.

In operation 1016, the electronic device 101 may transmit a data packet for requesting to provide a service discovery protocol service multiplexer (service discovery protocol/service multiplexer (SD_PSM)) allocated to the selected service (e.g., the second service) to the external electronic device 300. In operation 1018, the external electronic device 300 may transmit a data packet including SD_PSM to the electronic device 101.

In operation 1020, the electronic device 101 may transmit a channel configuration request packet (e.g., an L2CAP connection request (e.g., L2CAP_CONNECTION_REQ) packet) for configuring a channel (e.g., a connection-based L2CAP channel) for service use to the external electronic device 300. The channel configuration request packet may include the SD_PSM obtained in operation 1018. The external electronic device 300 may identify whether the SD_PSM included in the channel configuration request packet is the same as the SD_PSM allocated by the external electronic device 300. When the SD_PSM included in the channel configuration request packet is the same as the SD_PSM allocated by the external electronic device 300, in operation 1022, the external electronic device 300 may transmit a channel configuration response packet (e.g., an L2CAP connection response (L2CAP_CONNECTION_RSP) packet) to the electronic device 101. The channel configuration response packet may include information indicating that connection with the electronic device 101 is allowed. In an embodiment, the external electronic device 300 may allocate at least one service channel (e.g., logical channel) for performing data exchange with the electronic device 101, and include information about the at least one service channel in the channel configuration response packet and transmit the same to the electronic device 101.

In operation 1024, the electronic device 101 may transmit at least one data packet including data related to the second service to the external electronic device 300 in at least one service channel allocated by the external electronic device 300. In an embodiment, the transmitted at least one data packet may be configured in a data format defined according to the second service. In operation 1026, the electronic device 101 may receive at least one data packet including data related to the second service from the external electronic device 300 in at least one service channel allocated by the external electronic device 300. In an embodiment, the received at least one data packet may be configured in a data format defined according to the second service. In an embodiment, the operation order of operations 1024 and 1026 may be changed. In an embodiment, at least one of operations 1024 and 1026 may be performed one or more times, and at least one of operations 1024 and 1026 may be omitted.

The electronic device and method for operating the same according to embodiments of the disclosure may prevent the problem that it is possible to provide a service due to a connection failure when a new service with an external electronic device already connected is required.

The electronic device and method for operating the same according to embodiments of the disclosure may prevent the problem that it is possible to provide a service due to a connection failure when a new service with an external electronic device already connected is required.

An electronic device 101 according to an embodiment may comprise communication circuitry 190, memory 130, and at least one processor 120 functionally connected to the communication circuitry and the memory. The at least one processor may be configured to receive a second advertising signal related to a second service. The at least one processor may be configured to identify that a first Bluetooth connection for a first service is established with an external electronic device 300 based on a first advertising signal and the second advertising signal is broadcast from the external electronic device. The at least one processor may be configured to perform a service search procedure for the second service through the first Bluetooth connection. The at least one processor may be configured to transmit and/or receive data packets for the second service to/from the external electronic device through the first Bluetooth connection.

In an embodiment, the first advertising signal may include a first random private address RPA, and the second advertising signal may include a second RPA. In an embodiment, the at least one processor may be configured to identify that the first advertising signal and the second advertising signal are broadcast from the external electronic device based on the first RPA and the second RPA.

In an embodiment, the at least one processor may be configured to obtain an identity resolving key IRK list including at least one IRK, store the IRK list in the memory, and identify that the first advertising signal and the second advertising signal are broadcast from the external electronic device based on resolving the first RPA and the second RPA using a first IRK of the IRK list.

In an embodiment, the at least one processor may be configured to identify that the external electronic device supports the first service based on the first advertising signal, and identify that the external electronic device supports the second service based on the second advertising signal.

In an embodiment, the at least one processor may be configured to identify that the external electronic device supports the first service or the second service based on a designated data pattern and a manufacturer identifier included in the first advertising signal or the second advertising signal.

In an embodiment, the at least one processor may be configured to identify that the external electronic device supports the first service or the second service based on a service universally unique identifier UUID included in the first advertising signal or the second advertising signal.

In an embodiment, the service search procedure may include transmitting a generic attribute profile (GATT) service discovery packet for the second service to the external electronic device and receiving a GATT service discovery response packet for the second service from the external electronic device.

In an embodiment, the service search procedure may include transmitting a logical link control and adaptation protocol (L2CAP) connection request (L2CAP_CONNECTION_REQ) packet for the second service to the external electronic device and receiving an L2CAP connection response packet for the second service from the external electronic device.

In an embodiment, the first service may include any one of a continuity service or a file share service, and the second service may include another one of the continuity service or the file share service.

In an embodiment, the at least one processor may be configured to perform a connection procedure for establishing a second Bluetooth connection with the external electronic device in response to identifying that the electronic device is not connected to the external electronic device, and the second advertising signal is broadcast from the external electronic device.

A method for operating an electronic device 101 according to an embodiment may comprise receiving (710) a second advertising signal related to a second service. The method may comprise identifying (715) that a first Bluetooth connection for a first service is established with an external electronic device 300 based on a first advertising signal and the second advertising signal is broadcast from the external electronic device. The method may comprise performing (740) a service search procedure for the second service through the first Bluetooth connection. The method may comprise transmitting and/or receiving (745) data packets for the second service to/from the external electronic device through the first Bluetooth connection.

In an embodiment, the identifying 715 may include identifying that the first advertising signal and the second advertising signal are broadcast from the external electronic device based on a first random private address (RPA) included in the first advertising signal and a second RPA included in the second advertising signal.

In an embodiment, the method may further comprise obtaining an identity resolving key (IRK) list including at least one IRK and storing 705 the IRK list in memory 130. The identifying 715 may include identifying (730) that the first advertising signal and the second advertising signal are broadcast from the external electronic device based on resolving the first RPA and the second RPA using a first IRK of the IRK list.

In an embodiment, the method may comprise identifying (606) that the external electronic device supports the first service based on the first advertising signal, and identifying (622) that the external electronic device supports the second service based on the second advertising signal.

In an embodiment, the identifying 606 or 622 may include identifying that the external electronic device supports the first service or the second service based on a designated data pattern and a manufacturer identifier included in the first advertising signal or the second advertising signal.

In an embodiment, the identifying 606 or 622 may include identifying that the external electronic device supports the first service or the second service based on a service universally unique identifier (UUID) included in the first advertising signal or the second advertising signal.

In an embodiment, the service search procedure may include transmitting (1002 or 1012) a generic attribute profile GATT service discovery packet for the second service to the external electronic device and receiving (1004 or 1014) a GATT service discovery response packet for the second service from the external electronic device.

In an embodiment, the service search procedure may include transmitting (1020) a logical link control and adaptation protocol (L2CAP) connection request (L2CAP_CONNECTION_REQ) packet for the second service to the external electronic device and receiving (1022) an L2CAP connection response packet for the second service from the external electronic device.

In an embodiment, the first service may include any one of a continuity service or a file share service, and the second service may include another one of the continuity service or the file share service.

In an embodiment, the method may comprise performing (735) a connection procedure for establishing a second Bluetooth connection with the external electronic device in response to identifying that the electronic device is not connected to the external electronic device, and the second advertising signal is broadcast from the external electronic device.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
communication circuitry (190);
memory (130); and
at least one processor (120) functionally connected to the communication circuitry and the memory, wherein the at least one processor is configured to:
receive a second advertising signal related to a second service;
identify that a first Bluetooth connection for a first service is established with an external electronic device (300) based on a first advertising signal and the second advertising signal is broadcast from the external electronic device;
perform a service search procedure for the second service through the first Bluetooth connection; and
transmit and/or receive data packets for the second service to/from the external electronic device through the first Bluetooth connection.

2. The electronic device of claim 1, wherein the first advertising signal includes a first random private address (RPA), and the second advertising signal includes a second RPA, and wherein the at least one processor is configured to identify that the first advertising signal and the second advertising signal are broadcast from the external electronic device based on the first RPA and the second RPA.

3. The electronic device of claim 1 or 2, wherein the at least one processor is configured to:
obtain an identity resolving key (IRK) list including at least one IRK;
store the IRK list in the memory; and
identify that the first advertising signal and the second advertising signal are broadcast from the external electronic device based on resolving the first RPA and the second RPA using a first IRK of the IRK list.

4. The electronic device of any one of claims 1 to 3, wherein the at least one processor is configured to:
identify that the external electronic device supports the first service based on the first advertising signal; and
identify that the external electronic device supports the second service based on the second advertising signal.

5. The electronic device of claim 4, wherein the at least one processor is configured to identify that the external electronic device supports the first service or the second service based on a designated data pattern and a manufacturer identifier included in the first advertising signal or the second advertising signal.

6. The electronic device of claim 4, wherein the at least one processor is configured to identify that the external electronic device supports the first service or the second service based on a service universally unique identifier (UUID) included in the first advertising signal or the second advertising signal.

7. The electronic device of any one of claims 1 to 6, wherein the service search procedure includes:
transmitting a generic attribute profile (GATT) service discovery packet for the second service to the external electronic device; and
receiving a GATT service discovery response packet for the second service from the external electronic device.

8. The electronic device of any one of claims 1 to 6, wherein the service search procedure includes:
transmitting a logical link control and adaptation protocol (L2CAP) connection request (L2CAP_CONNECTION_REQ) packet for the second service to the external electronic device; and
receiving an L2CAP connection response packet for the second service from the external electronic device.

9. The electronic device of any one of claims 1 to 8, wherein the first service includes any one of a continuity service or a file share service, and wherein the second service includes another one of the continuity service or the file share service.

10. The electronic device of any one of claims 1 to 9, wherein the at least one processor is configured to perform a connection procedure for establishing a second Bluetooth connection with the external electronic device in response to identifying that the electronic device is not connected to the external electronic device, and the second advertising signal is broadcast from the external electronic device.

11. A method for operating an electronic device (101), the method comprising:
receiving (710) a second advertising signal related to a second service;
identifying (715) that a first Bluetooth connection for a first service is established with an external electronic device (300) based on a first advertising signal and the second advertising signal is broadcast from the external electronic device;
performing (740) a service search procedure for the second service through the first Bluetooth connection; and
transmitting and/or receiving (745) data packets for the second service to/from the external electronic device through the first Bluetooth connection.

12. The method of claim 11, wherein the identifying (715) includes identifying that the first advertising signal and the second advertising signal are broadcast from the external electronic device based on a first random private address (RPA) included in the first advertising signal and a second RPA included in the second advertising signal.

13. The method of claim 11 or 12, further comprising obtaining an identity resolving key (IRK) list including at least one IRK and storing (705) the IRK list in memory (130), wherein the identifying (715) includes identifying (730) that the first advertising signal and the second advertising signal are broadcast from the external electronic device based on resolving the first RPA and the second RPA using a first IRK of the IRK list.

14. The method of any one of claims 11 to 13, further comprising:
identifying (606) that the external electronic device supports the first service based on the first advertising signal; and
identifying (622) that the external electronic device supports the second service based on the second advertising signal, wherein the identifying (606 or 622) includes:
identifying that the external electronic device supports the first service or the second service based on a designated data pattern and a manufacturer identifier included in the first advertising signal or the second advertising signal; or
identifying that the external electronic device supports the first service or the second service based on a service universally unique identifier (UUID) included in the first advertising signal or the second advertising signal.

15. The method of any one of claims 11 to 14, wherein the first service includes any one of a continuity service or a file share service, and wherein the second service includes another one of the continuity service or the file share service.
